# EUROPÄISCHE PATENTSCHRIFT

(11) **EP 3 415 070 B1**
(45) Veröffentlichungstag und Bekanntmachung des Hinweises auf die Patenterteilung: **21.09.2022**
(21) Anmeldenummer: 18172596.1
(22) Anmeldetag: 16.05.2018
(51) Int. Cl.: A47L 15/46, A47L 9/28, A01B 79/00, A47L 9/04, A47L 11/10, G05D 1/02, H04L 12/28, A01D 34/00

(54) **SYSTEM MIT MINDESTENS ZWEI BODENBEARBEITUNGSEINRICHTUNGEN**
SYSTEM COMPRISING AT LEAST TWO GROUND PROCESSING DEVICES
SYSTÈME POURVU D'AU MOINS DEUX DISPOSITIFS DE TRAITEMENT DU SOL

(30) Priorität: 16.06.2017 DE 102017113288
(43) Veröffentlichungstag der Anmeldung: 19.12.2018
(73) Patentinhaber: Vorwerk & Co. Interholding GmbH, 42275 Wuppertal (DE)
(72) Erfinder: Hackert, Georg, 44869 Bochum (DE); Helmich, Martin, 47055 Duisburg (DE); Hillen, Lorenz, 42287 Wuppertal (DE); Holz, Christian, 44137 Dortmund (DE); Isenberg, Gerhard, 50668 Köln (DE); Koetz, Hendrik, 58300 Wetter (DE); Mosebach, Andrej, 44809 Bochum (DE); Ortmann, Roman, 47057 Duisburg (DE); Dulinski, Robin, 42283 Wuppertal (DE)
(74) Vertreter: Müller, Enno

(56) Entgegenhaltungen:
- WO-A1-2017/073955
- WO-A2-2009/102970
- US-A1- 2016 249 780

## Beschreibung

### Gebiet der Technik

Die Erfindung betrifft ein System mit mindestens zwei Bodenbearbeitungseinrichtungen eines oder mehrerer sich selbsttätig fortbewegender Bodenbearbeitungsgeräte zur automatisch gesteuerten Bearbeitung einer Fläche, wobei das System eine den Bodenbearbeitungseinrichtungen gemeinsam zugeordnete Datenbank aufweist, welche in einem zu dem Bodenbearbeitungsgerät separat ausgebildeten externen Speicher gespeichert ist und in welcher nach definierten Regeln Einsatztätigkeiten für die Bodenbearbeitungseinrichtungen geplant sind, sowie eine der Datenbank zugeordnete zentrale Recheneinrichtung, welche Einsatztätigkeiten nach definierten Regeln plant.

Des Weiteren betrifft die Erfindung ein Verfahren zum Betrieb eines Systems mit mindestens zwei Bodenbearbeitungseinrichtungen eines oder mehrerer sich selbsttätig fortbewegender Bodenbearbeitungsgeräte, wobei eine Fläche automatisch gesteuert mittels der Bodenbearbeitungseinrichtungen bearbeitet wird, wobei Einsatztätigkeiten für die Bodenbearbeitungseinrichtungen von einer zentralen Recheneinrichtung des Systems nach definierten Regeln geplant werden, wobei die geplanten Einsatztätigkeiten in einer den Bodenbearbeitungseinrichtungen gemeinsam zugeordneten und in einem zu dem Bodenbearbeitungsgerät separat ausgebildeten externen Speicher gespeicherten Datenbank gespeichert werden.

### Stand der Technik

Bodenbearbeitungseinrichtungen als Komponenten von sich selbsttätig fortbewegenden Bodenbearbeitungsgeräten sind im Stand der Technik bekannt. Die Bodenbearbeitungseinrichtungen können beispielsweise Reinigungselemente wie Bürsten oder Wischelemente, Polierelemente, Schleifelemente, Mähwerkzeuge oder dergleichen sein. Die Bodenbearbeitungseinrichtungen können fest an den Bodenbearbeitungsgeräten installierte Komponenten oder wechselbar angeordnete Komponenten sein. Die Bodenbearbeitungsgeräte, welche die Bodenbearbeitungseinrichtungen aufweisen, sind insbesondere autonome Bodenbearbeitungsroboter, wie beispielsweise Reinigungsroboter zum Saugen, Wischen, Polieren, Schleifen und/ oder Rasen mähen.

Des Weiteren ist es im Stand der Technik bekannt, die Bodenbearbeitungseinrichtung eines Bodenbearbeitungsgerätes automatisch zu steuern. Die Bodenbearbeitungseinrichtung führt Einsatztätigkeiten aus, wobei die Bodenbearbeitungseinrichtung beispielsweise eine Fläche absaugt, eine Fläche mittels einer Borstenwalze reinigt, Flüssigkeit auf eine Fläche aufbringt oder dergleichen. Es ist bekannt, unterschiedliche Einsatztätigkeiten gleichzeitig oder auch zeitlich nacheinander auszuführen.

Aus der WO 2017/073955 A1 ist ein Roboter beschrieben, welcher einen zentralen Zugangspunkt für ein Kommunikationsnetzwerk mit mehreren Robotern darstellt. Der Roboter steuert Einsatztätigkeiten für die Roboter des Kommunikationsnetzwerks auf der Basis von eingegebenen Nutzerkommandos. Die WO2009/102970 A2 offenbart ein System mit einem Systemmanager und mehreren Robotern, wobei mittels eine Planungssystems Roboteraktivitäten geplant werden, zum Beispiel um Aktivitäten mehrerer Roboter zu koordinieren.

### Zusammenfassung der Erfindung

Obwohl sich die autonomen Bodenbearbeitungsgeräte mit automatisch gesteuerten Bodenbearbeitungseinrichtungen bewährt haben, ist es Aufgabe der Erfindung, ein System mit mehreren Bodenbearbeitungseinrichtungen bzw. mehreren sich selbsttätig fortbewegenden Bodenbearbeitungsgeräten mit zumindest je einer Bodenbearbeitungseinrichtung zu schaffen, welches dahingehend weiterentwickelt ist, dass die Bodenbearbeitungseinrichtungen vorteilhaft zusammenarbeiten und sich unterstützen.

Zur Lösung der vorgenannten Aufgabe werden ein System entsprechend Anspruch 1 und ein Verfahren entsprechend Anspruch 5 vorgeschlagen.

Das System ist ausgebildet, eine gemeinsame Datenbank bereitzustellen, welche Einsatztätigkeiten für mehrere Bodenbearbeitungseinrichtungen bzw. Bodenbearbeitungsgeräte enthält. Die Einsatztätigkeiten der Bodenbearbeitungseinrichtungen werden so koordiniert, dass Einsatztätigkeiten der Bodenbearbeitungseinrichtungen werden so koordiniert, dass diese vorteilhaft zusammenwirken. Das erfindungsgemäße System kann beispielsweise ein einziges Bodenbearbeitungsgerät mit mindestens zwei Bodenbearbeitungseinrichtungen aufweisen, zwei Bodenbearbeitungsgeräte mit jeweils einer Bodenbearbeitungseinrichtung oder auch mehr als zwei Bodenbearbeitungsgeräte mit einer oder mehr Bodenbearbeitungseinrichtungen. Es empfiehlt sich besonders, dass die Bodenbearbeitungseinrichtungen unterschiedliche Reinigungsfähigkeiten aufweisen, beispielsweise ausgebildet sind als ein Reinigungselement für eine Trockenreinigung und ein Reinigungselement für eine Feuchtreinigung. Die den Bodenbearbeitungseinrichtungen gemeinsam zugeordnete Datenbank dient als übergeordnete Datenbank des Systems für eine Einsatzplanung der Bodenbearbeitungseinrichtungen nach festgelegten Regeln. Diese Regeln können von einem Nutzer des Systems festgelegt sein und Bedingungen betreffen, bei deren Eintreten eine Bodenbearbeitung mittels einer oder auch mehrerer Bodenbearbeitungseinrichtungen des Systems erfolgen soll.

Es wird vorgeschlagen, dass die Bodenbearbeitungseinrichtungen an demselben Bodenbearbeitungsgerät oder an zwei verschiedenen Bodenbearbeitungsgeräten ausgebildet sind. Im Sinne der Erfindung kann eine Ausführungsform vorgesehen sein, bei welcher das System nur ein einziges Bodenbearbeitungsgerät aufweist. In diesem Fall weist das Bodenbearbeitungsgerät jedoch mindestens zwei Bodenbearbeitungseinrichtungen auf, deren Einsatztätigkeiten nach definierten Regeln in der Datenbank geplant sind. Des Weiteren kann das System auch zwei Bodenbearbeitungsgeräte aufweisen, wobei jedes der Bodenbearbeitungsgeräte dann zumindest eine Bodenbearbeitungseinrichtung aufweist. Die Bodenbearbeitungseinrichtungen können beispielsweise ein Trockenreinigungselement und ein Feuchtreinigungselement sein, wobei es im Sinne der Erfindung unerheblich ist, ob diese an demselben Bodenbearbeitungsgerät oder an zwei verschiedenen Bodenbearbeitungsgeräten angeordnet sind.

Ein Bodenbearbeitungsgerät kann beispielsweise eine Detektionseinrichtung aufweisen, mittels welcher eine Umgebung des Systems erfasst werden kann. Die Detektionseinrichtung kann beispielsweise eine Kamera sein, die auf eine Bodenfläche eines Raumes gerichtet ist. Mittels der Detektionseinrichtung können Hindernisse innerhalb der Umgebung detektiert werden, jedoch auch Objekte, welche eine Einsatztätigkeit einer Bodenbearbeitungseinrichtung erfordern. Dies kann beispielsweise eine Verschmutzung eines Teilbereiches der Bodenfläche sein. Aus den Bildern der Kamera oder auch Messdaten einer Abstandsmesseinrichtung kann eine Umgebungskarte erstellt werden, anhand welcher eine Fortbewegung des Bodenbearbeitungsgerätes geplant werden kann. Eine als Abstandsmesseinrichtung ausgebildete Detektionseinrichtung arbeitet beispielsweise berührungslos mit Hilfe von Licht und/oder Ultraschall. Die aus den Umgebungsdaten erstellte Umgebungskarte kann mit der den Bodenbearbeitungseinrichtungen gemeinsam zugeordneten Datenbank verknüpft sein, so dass allen Bodenbearbeitungsgeräten, welche auf die Datenbank zugreifen, eine identische Umgebungskarte zur Verfügung steht. Die Detektionseinrichtung kann neben der Erfassung von Umgebungsdaten zur Navigation auch Ereignisse innerhalb der Umgebung detektieren, welche eine Einsatztätigkeit einer Bodenbearbeitungseinrichtung erfordern. Beispielsweise kann die Detektionseinrichtung eine Verschmutzung eines Teilbereiches einer Bodenfläche erkennen, insbesondere auch die Art der Verschmutzung, beispielsweise Grobgut, Flecken und dergleichen. Diese Information wird vorteilhaft mit einer Information über die korrespondierende räumliche Position verknüpft und an eine Recheneinrichtung des Systems übermittelt, welche die gemeinsame Datenbank aktualisiert, d. h. Einsatztätigkeiten für die Bodenbearbeitungseinrichtungen nach definierten Regeln plant. Alternativ kann die Detektionseinrichtung auch außerhalb des Bodenbearbeitungsgerätes innerhalb der Umgebung angeordnet sein, beispielsweise in Form einer Deckenkamera oder eines separaten Erkundungsroboters, der selbst keine Reinigungstätigkeit ausführt, aber in der Lage ist, eine Verschmutzung, Verschmutzungsart und räumliche Position dieser zu bestimmen. Für die Ermittlung einer Verschmutzung kann die Detektionseinrichtung zunächst ein Bild der Bodenfläche in einem unverschmutzten Zustand aufnehmen, welches Bild anschließend als Referenz herangezogen wird, um später aufgenommene Bilder in Bezug auf eine potentielle Verschmutzung auswerten zu können. Auf der Basis einer Mustererkennung wird somit die Verschmutzung erkannt und einer bestimmten räumlichen Position zugeordnet.

Es wird vorgeschlagen, dass die Einsatztätigkeiten der Bodenbearbeitungseinrichtungen zeitabhängig und ereignisabhängig geplant sind. Sofern die Einsatztätigkeiten beispielsweise zeitabhängig geplant sind, weist die Datenbank eine Tabelle auf, in welcher die Einsatztätigkeiten jeder Bodenbearbeitungseinrichtung nach Jahren, Monaten, Tagen und/oder Uhrzeiten geplant sind. Da die Datenbank eine den Bodenbearbeitungseinrichtungen gemeinsam zugeordnete Datenbank ist, enthält die Tabelle sowohl Einsatztätigkeiten einer ersten Bodenbearbeitungseinrichtung, als auch Einsatztätigkeiten einer zweiten Bodenbearbeitungseinrichtung, und gegebenenfalls Einsatztätigkeiten weiterer Bodenbearbeitungseinrichtungen. Somit ist ein zeitlicher Zusammenhang derart geschaffen, dass die Datenbank Informationen darüber enthält, welche Einsatztätigkeit zu einem bestimmten Zeitpunkt durch welche Bodenbearbeitungseinrichtung ausgeführt wird. Des Weiteren sind die Einsatztätigkeiten zusätzlich ereignisabhängig geplant, so dass Wenn-Dann-Verknüpfungen zwischen definierten Ereignissen und dadurch ausgelösten Einsatztätigkeiten der Bodenbearbeitungseinrichtungen definiert sind. Dabei können Einsatztätigkeiten gleichzeitig zeitabhängig und ereignisabhängig definiert sein. Beispielsweise kann eine Einsatztätigkeit einer Bodenbearbeitungseinrichtung nur dann ausgelöst werden, wenn zu einem bestimmten Zeitpunkt ein definiertes Ereignis eintritt.

Des Weiteren wird vorgeschlagen, dass zwei oder mehr Einsatztätigkeiten einer oder mehrerer Bodenbearbeitungseinrichtungen voneinander abhängig geplant sind. Gemäß dieser Ausführung sind zumindest zwei Einsatztätigkeiten so geplant, dass eine zweite Einsatztätigkeit nur dann ausgeführt wird, wenn zuvor eine erste Einsatztätigkeit ausgeführt wurde. Dabei kann als Bedingung vorausgesetzt sein, dass überhaupt eine erste Einsatztätigkeit ausgeführt wurde oder dass die erste Einsatztätigkeit einen bestimmten Inhalt hatte. Beispielsweise kann es sich bei der ersten Einsatztätigkeit um eine Saugreinigung handeln und bei der zweiten Einsatztätigkeit um eine Wischreinigung, welche jedoch nur dann sinnvoll ist, wenn zuvor gesaugt wurde. Sofern die erste Einsatztätigkeit nicht ausgeführt wird, entfällt auch die zweite Einsatztätigkeit. Innerhalb der gemeinsam zugeordneten Datenbank bilden mindestens zwei Einsatztätigkeiten somit eine Tätigkeitsfolge, in welcher eine nachfolgende Einsatztätigkeit von einer zeitlich früheren Einsatztätigkeit abhängig ist.

Des Weiteren wird vorgeschlagen, dass die Datenbank in einem lokalen Speicher eines Bodenbearbeitungsgerätes und/oder in einem dazu separat ausgebildeten externen Speicher gespeichert ist. Der separat ausgebildete externe Speicher kann insbesondere ein Speicher eines Webservers, beispielsweise einer Cloud, oder ein Speicher eines mobilen Kommunikationsgerätes wie beispielsweise eines Mobiltelefons, Tablet-Computers, Laptops oder dergleichen sein. Die gemeinsame Datenbank des Systems kann somit grundsätzlich in jedem Bodenbearbeitungsgerät oder auch in einer separaten Einrichtung des Systems ausgebildet sein. Sofern die Datenbank in einem lokalen Speicher eines Bodenbearbeitungsgerätes gespeichert ist, greifen dennoch auch die in dem System vorhandenen anderen Bodenbearbeitungsgeräte auf diese gemeinsame Datenbank zu. Die Kommunikation zwischen den Bodenbearbeitungsgeräten und dem Speicher erfolgt vorzugsweise drahtlos, insbesondere mittels einer Funktechnologie wie WLAN, Bluetooth oder ZigBee. Darüber hinaus kann grundsätzlich auch eine drahtgebundene Kommunikation verwendet werden, beispielsweise wenn der Speicher in einer Basisstation ausgebildet ist, an welcher ein Bodenbearbeitungsgerät andocken kann. Die Basisstation dient vorzugsweise nicht nur der Speicherung der Datenbank, sondern zusätzlich der Ausführung einer oder mehrerer Servicetätigkeiten für ein Bodenbearbeitungsgerät, beispielsweise dem Aufladen eines Akkumulators des Bodenbearbeitungsgerätes, dem Entleeren eines Sauggutsammelbehälters oder dergleichen. Das System kann des Weiteren beispielsweise einen in einem Haushalt oder im Internet befindlichen Server, einen externen Rechner bzw. eine externe Steuereinheit oder ein als solches ausgestattetes Smartphone und/oder einen Tablet-Computer mit einer entsprechenden Applikation aufweisen und drahtlos, oder bei rein hausinternen Systemkomponenten auch drahtgebunden, mit den die Bodenbearbeitungseinrichtungen aufweisenden Bodenbearbeitungsgeräten und/oder vorhandenen Basisstationen verbunden sein.

Des Weiteren wird vorgeschlagen, dass zu einer in der Datenbank gespeicherten Einsatztätigkeit eine Folgetätigkeit gespeichert ist, wobei die Folgetätigkeit insbesondere abhängig von einem Fehlschlagen der ausgeführten Einsatztätigkeit definiert ist. In der Datenbank sind Einsatztätigkeiten derart miteinander verknüpft, dass zu einer Einsatztätigkeit eine Folgetätigkeit gespeichert ist, welche entweder in zeitlicher Abhängigkeit zu dieser ausgeführt werden soll, oder nur bei Vorliegen definierter Bedingungen, beispielsweise in einem Fall, in welchem die Einsatztätigkeit fehlschlägt. Als ein Fehlschlagen einer Einsatztätigkeit kann es beispielsweise definiert sein, dass die Einsatztätigkeit nicht erfolgreich durch eine Bodenbearbeitungseinrichtung ausgeführt und/ oder nicht vollständig abgeschlossen werden kann. Sofern die zuerst geplante Einsatztätigkeit fehlschlägt, ruft eine Steuerung des Systems die für diesen Fall definierte Folgetätigkeit aus der Datenbank ab, so dass gegebenenfalls eine andere Bodenbearbeitungseinrichtung zum Ausführen der Einsatztätigkeit gesteuert werden kann. Im Falle einer durch eine der Bodenbearbeitungseinrichtungen nicht beseitigte Verschmutzung kann beispielsweise eine andere Bodenbearbeitungseinrichtung zur Beseitigung herangezogen werden. Die Regeln, nach welchen Folgetätigkeiten definiert sind, können manuell von einem Nutzer in das System eingegeben sein, beispielsweise über eine Eingabeschnittstelle eines der Bodenbearbeitungsgeräte, eine Eingabeschnittstelle einer die Datenbank enthaltenden Basisstation oder auch mittels eines separaten Endgerätes, beispielsweise einem Mobiltelefon, einem PC, einem Laptop und/ oder einem Tablet-Computer, auf welchem eine Applikation zum Zugriff auf die Datenbank installiert ist. Als Folgetätigkeit können beispielsweise folgende definiert sein: Beseitigung einer in einem ersten Schritt nicht vollständig beseitigten Verschmutzung (entweder durch dieselbe Bodenbearbeitungseinrichtung oder eine andere Bodenbearbeitungseinrichtung), Ausführen einer Analyse der Fehlfunktion, Ausführen einer Spotreinigung an einer räumlichen Position mit intensiver Verschmutzung, Übermittlung einer Benachrichtigung über das Fehlschlagen der Einsatztätigkeit an einen Nutzer des Systems, Übermittlung einer Benachrichtigung über das Fehlschlagen der Einsatztätigkeit an einen externen Dienstleister, beispielsweise an einen Hersteller der die fehlgeschlagene Einsatztätigkeit ausführenden Bodenbearbeitungseinrichtung.

Insbesondere wird vorgeschlagen, dass die Folgetätigkeit eine Wiederholung der Einsatztätigkeit und/ oder eine Einsatztätigkeit einer anderen Bodenbearbeitungseinrichtung ist, und/oder dass die Folgetätigkeit eine Fehleranalyse und/ oder eine Benachrichtigung eines Nutzers beinhaltet.

Neben dem zuvor beschriebenen System wird mit der Erfindung des Weiteren ein Verfahren entsprechend Anspruch 5 vorgeschlagen. Wie bereits zuvor in Bezug auf das System beschrieben, ermöglicht das erfindungsgemäße Verfahren nun die Verknüpfung des Ausführens von Einsatztätigkeiten mehrerer Bodenbearbeitungseinrichtungen über eine gemeinsame Datenbank, welche eine Planung von Einsatztätigkeiten mehrerer Bodenbearbeitungseinrichtungen enthält. Die Bodenbearbeitungseinrichtungen arbeiten somit nicht unabhängig voneinander, sondern greifen auf dieselbe Datenbank zu, welche die Einsatztätigkeiten so koordiniert, dass sich diese nicht behindern, sondern vorzugsweise nach definierten Regeln ergänzen und unterstützen. Die weiteren Vorteile und Merkmale des erfindungsgemäßen Verfahrens ergeben sich wie zuvor in Bezug auf die Funktionsweise des erfindungsgemäßen Systems erläutert.

Insbesondere wird vorgeschlagen, dass die Einsatztätigkeiten der Bodenbearbeitungseinrichtungen zeitabhängig und/oder ereignisabhängig geplant werden und/ oder dass zwei oder mehr Einsatztätigkeiten einer oder mehrerer Bodenbearbeitungseinrichtungen voneinander abhängig geplant werden.

Des Weiteren kann es vorgesehen sein, dass in Abhängigkeit von einem bestimmten Ereignis, insbesondere einem Fehlschlagen einer ausgeführten Einsatztätigkeit, eine definierte Folgetätigkeit ausgeführt wird, insbesondere ein Wiederholen der Einsatztätigkeit und/ oder eine Einsatztätigkeit einer anderen Bodenbearbeitungseinrichtung und/ oder eine Fehleranalyse und/ oder ein Benachrichtigen eines Nutzers.

Insgesamt kann das Verfahren somit vorsehen, dass zwei autonom arbeitende Bodenbearbeitungsgeräte mit unterschiedlichen Reinigungsfähigkeiten, d. h. verschiedenen Bodenbearbeitungseinrichtungen, in definierten Situationen zusammenarbeiten. Beispielsweise kann im Falle einer durch eines der Bodenbearbeitungsgeräte erkannten Verschmutzung, die durch dieses Bodenbearbeitungsgerät nicht beseitigt werden kann, dahingehend auf die Situation reagiert werden, dass eine Mitteilung über das Fehlschlagen der Einsatztätigkeit an die Datenbank übermittelt wird, die daraufhin eine für diesen Fall vorgesehene Folgetätigkeit ausgibt. Die den Bodenbearbeitungseinrichtungen bzw. Bodenbearbeitungsgeräten gemeinsam zugeordnete Datenbank dient der Einsatzplanung nach festgelegten Regeln. Diese Regeln können von einem Nutzer des Systems gesetzt sein und Rahmenbedingungen definieren, unter welchen eine Einsatztätigkeit erfolgen bzw. nicht erfolgen soll. In einem besonders einfachen Fall ist eine Einsatzplanung eine reine zeitliche Terminplanung. Darüber hinaus kann eine Einsatzplanung auch ereignisabhängig erfolgen. Beispielsweise kann vorgesehen sein, dass ein Bodenbearbeitungsgerät eine ergänzende Reinigungsleistung durch ein zweites Bodenbearbeitungsgerät auslöst, wenn die Einsatztätigkeit fehlschlägt. In der gemeinsamen Datenbank der Bodenbearbeitungsgeräte kann beispielsweise definiert sein, dass ein für eine ergänzende Bearbeitung vorgesehenes Bodenbearbeitungsgerät zum Zwecke einer Spotreinigung an eine bestimmte Einsatzstelle gesteuert wird. Zusätzlich kann eine von einem ersten Bodenbearbeitungsgerät detektierte Verschmutzung analysiert werden, so dass eine ergänzende Bearbeitung durch ein anderes Bodenbearbeitungsgerät nur dann erfolgt, wenn eine ausreichend hohe Wahrscheinlichkeit für einen Reinigungserfolg gegeben ist. Des Weiteren kann vorgesehen sein, dass ein Nutzer des Systems eine Benachrichtigung über eine nicht erfolgreich durchgeführte Einsatztätigkeit erhält, so dass der Nutzer gegebenenfalls manuell eine Folgetätigkeit festlegen, abändern und/ oder bestätigen kann. Des Weiteren kann alternativ oder zusätzlich zu der Benachrichtigung an einen Nutzer auch eine Benachrichtigung an einen externen Dienstleister erfolgen, welcher dann eine professionelle Reinigung mit besonderen Reinigungsmitteln anbieten und/oder durchführen kann. Ergänzend zu der Einsatzplanung kann innerhalb des Systems auch eine zentrale Verwaltung von Kartierungsinformationen vorgesehen sein, so dass allen in dem System verbundenen Bodenbearbeitungsgeräten eine identische Umgebungskarte zur Verfügung steht, welche zur Steuerung des jeweiligen Bodenbearbeitungsgerätes an einen bestimmten Ort vorteilhaft ist.

Insbesondere kann durch ein mehrstufiges Bodenbearbeitungsverfahren ein optimaler Erfolg erreicht werden, falls beispielsweise eine erste Bodenbearbeitungseinrichtung nicht den gewünschten Bodenbearbeitungserfolg erbringen konnte. Die Mehrstufigkeit zeichnet sich dadurch aus, dass vorzugsweise zwei oder mehr Arten von Bodenbearbeitungseinrichtungen aufeinander abgestimmt funktionieren, so dass zeit-/leistungsoptimiert gereinigt werden kann.

Gemäß einer beispielsweisen Ausführung kann vorgesehen sein, dass ein Trockenreinigungsgerät eine Reinigung in einem Raum durchführt und mit Hilfe einer Detektionseinrichtung Bereiche detektiert, die nicht gereinigt werden konnten, beispielsweise Bereiche mit festgetrockneten Verschmutzungen. Diese Informationen leitet das Trockenreinigungsgerät an eine Steuerung des Systems weiter, welche aus der gemeinsam zugeordneten Datenbank eine Folgetätigkeit für diese Situation entnimmt. Die für das Fehlschlagen der Einsatztätigkeit des Trockenreinigungsgerätes definierte Folgetätigkeit kann beispielsweise darin bestehen, dass ein Feuchtreinigungsgerät an die betreffende räumliche Position fährt und dort eine Feuchtreinigung ausführt. Sollte dieser räumliche Bereich nicht für eine Feuchtreinigung geeignet sein oder die Feuchtreinigung aus anderen Gründen fehlschlagen, so kann als eine weitere Folgetätigkeit vorgesehen sein, dass die Steuerung des Systems einen Nutzer über die fehlgeschlagene Tätigkeit informiert, so dass der Nutzer die Möglichkeit hat, die Reinigung manuell durchzuführen. Für die Benachrichtigung des Nutzers kann beispielsweise eine auf einem mobilen externen Gerät installierte Applikation genutzt werden.

### Kurze Beschreibung der Zeichnung

Im Folgenden wird die Erfindung anhand eines Ausführungsbeispiels näher erläutert. Es zeigt:

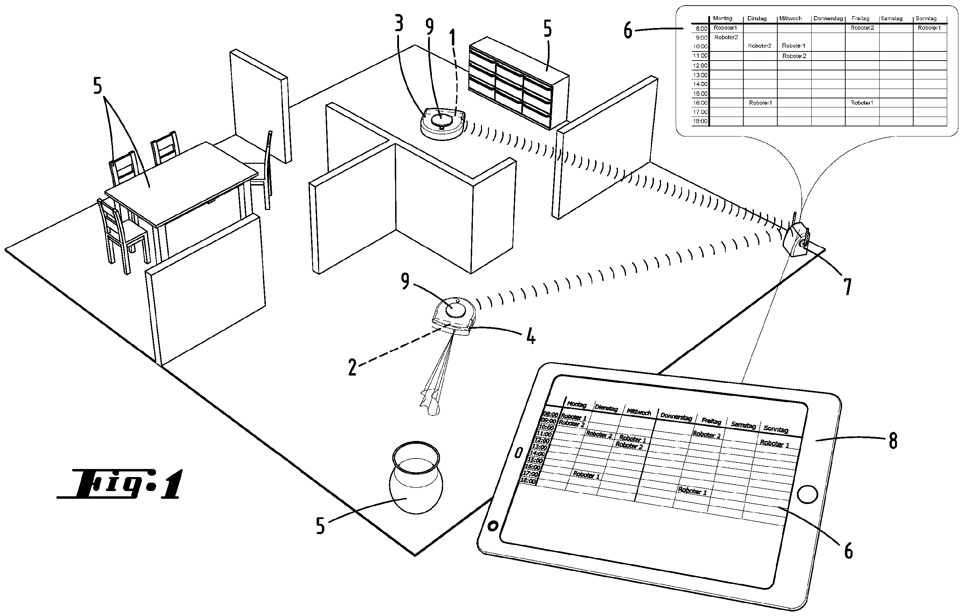

- Fig. 1: Ein erfindungsgemäßes System mit zwei Bodenbearbeitungsgeräten und einer diesen gemeinsam zugeordneten Datenbank.

### Beschreibung der Ausführungsformen

Figur 1 zeigt eine Umgebung, nämlich einen Teilbereich einer Wohnung mit mehreren Räumen. In den Räumen ist eine Vielzahl von Hindernissen 5 angeordnet, wie beispielsweise Möbelstücke und Raumbegrenzungen. In der Umgebung befindet sich ein System aus hier zwei sich selbsttätig fortbewegenden Bodenbearbeitungsgeräten 3, 4 sowie einem separat dazu ausgebildeten Speicher 7, in welchem eine Datenbank 6 gespeichert ist. Der Speicher 7 ist hier beispielsweise ein Server des Haushalts, mit welchem neben den Bodenbearbeitungsgeräten 3, 4 auch ein externes Kommunikationsgerät 8 in Kommunikationsverbindung steht.

Obwohl dies in der Figur nicht dargestellt ist, könnte der Speicher 7 auch Teil einer Basisstation sein, welche zur Ausführung einer oder mehrerer Servicetätigkeiten für die Bodenbearbeitungsgeräte 3, 4 ausgebildet ist. Mit einer solchen Basisstation können sich Bodenbearbeitungsgeräte 3, 4 beispielsweise verbinden, um einen Akkumulator aufzuladen oder einen Sauggutsammelbehälter zu leeren.

Die Bodenbearbeitungsgeräte 3, 4 weisen jeweils einen lokalen Speicher (nicht dargestellt) auf, in welchem eine Umgebungskarte der Umgebung gespeichert ist. Anhand der Umgebungskarte kann sich das Bodenbearbeitungsgerät 3, 4 bei einer selbsttätigen Fortbewegung in der Umgebung orientieren und selbstlokalisieren. Die Bodenbearbeitungsgeräte 3, 4 sind hier beispielsweise ein als Wischroboter ausgebildetes Bodenbearbeitungsgerät 3 und ein als Saugroboter ausgebildetes Bodenbearbeitungsgerät 4. Die Bodenbearbeitungsgeräte 3, 4 verfügen über motorisch angetriebene Räder, mit deren Hilfe sich diese innerhalb der Umgebung fortbewegen können. Des Weiteren weisen die Bodenbearbeitungsgeräte 3, 4 Bodenbearbeitungseinrichtungen 1, 2 auf. Hier weist das Bodenbearbeitungsgerät 3 eine als Wischwalze ausgebildete Bodenbearbeitungseinrichtung 1 und das Bodenbearbeitungsgerät 4 eine als Borstenwalze ausgebildete Bodenbearbeitungseinrichtung 2 auf. Die Bodenbearbeitungseinrichtungen 1, 2 dienen der Einwirkung auf eine zu reinigende Fläche. Weiter weist das als Saugroboter ausgebildete Bodenbearbeitungsgerät 4 eine nicht weiter dargestellte Saugmundöffnung auf, über welche mittels einer Motor-Gebläse-Einheit mit Sauggut beaufschlagte Luft in das Bodenbearbeitungsgerät 4 eingesaugt werden kann. Das als Wischgerät ausgebildete Bodenbearbeitungsgerät 3 verfügt beispielsweise über einen nicht näher dargestellten Flüssigkeitstank und eine Flüssigkeitsauftragseinrichtung, welche Flüssigkeit aus dem Flüssigkeitstank auf die Bodenbearbeitungseinrichtung 1, nämlich die Wischwalze, und/oder die zu reinigende Fläche abgeben kann. Für die Elektroversorgung der einzelnen Elektrokomponenten der Bodenbearbeitungsgeräte 3, 4, wie für den Antrieb der Räder, der Bodenbearbeitungseinrichtungen 1, 2 und weiter vorgesehene Elektronik, weisen die Bodenbearbeitungsgeräte 3, 4 jeweils einen nicht dargestellten, wiederaufladbaren Akkumulator auf.

Die Bodenbearbeitungsgeräte 3, 4 sind des Weiteren jeweils mit einer Detektionseinrichtung 9 ausgestattet, welche hier beispielsweise eine Triangulationsmesseinrichtung aufweist. Die Detektionseinrichtung 9 misst Abstände zu den Hindernissen 5 innerhalb der Umgebung. Die Detektionseinrichtung 9 weist im Einzelnen jeweils eine Laserdiode auf, deren emittierter Lichtstrahl über eine Umlenkeinrichtung aus einem Gehäuse des Bodenbearbeitungsgerätes 3, 4 herausgeführt und um eine in der gezeigten Orientierung des Bodenbearbeitungsgerätes 3, 4 senkrecht stehende Drehachse rotierbar ist, insbesondere innerhalb eines Winkelbereichs von 360 Grad. Dadurch ist eine Rundum-Abstandsmessung um das Bodenbearbeitungsgerät 3, 4 möglich. Mit Hilfe der Detektionseinrichtung 9 kann die Umgebung in einer bevorzugt horizontalen Ebene vermessen werden, d.h. in einer zu der zu reinigenden Fläche parallelen Ebene. Dadurch kann das Bodenbearbeitungsgerät 3, 4 unter Vermeidung einer Kollision mit den Hindernissen 5 in der Umgebung verfahren. Die mittels der Detektionseinrichtung 9 aufgenommenen Umgebungsdaten werden zur Erstellung einer Umgebungskarte der Umgebung genutzt. Des Weiteren kann das Bodenbearbeitungsgerät 3, 4 beispielsweise einen nicht dargestellten Odometrie-Sensor aufweisen, welcher eine von dem jeweiligen Bodenbearbeitungsgerät 3, 4 zurückgelegte Wegstrecke misst. Des Weiteren ist es auch möglich, dass ein Bodenbearbeitungsgerät 3, 4 beispielsweise einen Kontaktsensor oder dergleichen aufweist.

Die Bodenbearbeitungsgeräte 3, 4 weisen eine Kommunikationsverbindung zu dem Speicher 7 mit der darin gespeicherten gemeinsamen Datenbank 6 auf. Die Kommunikationsverbindung ist hier beispielsweise eine WLAN-Verbindung.

Die Erfindung gemäß dieser Ausführungsform erfolgt beispielsweise so, dass die Bodenbearbeitungsgeräte 3, 4 innerhalb der Umgebung Reinigungstätigkeiten ausführen. Während der Fortbewegung greifen die Bodenbearbeitungsgeräte 3, 4 auf die lokale in dem jeweiligen Bodenbearbeitungsgerät 3, 4 gespeicherte Umgebungskarte zu. Die Reinigungstätigkeiten der Bodenbearbeitungsgeräte 3, 4 werden in Abhängigkeit von einem Reinigungsplan gesteuert, welcher in der Datenbank 6 des Speichers 7 gespeichert ist.

Wie in der Figur dargestellt weist die Datenbank 6 einen Kalender auf, welcher nach Wochentagen und Uhrzeiten geplante Reinigungstätigkeiten der Bodenbearbeitungsgeräte 3, 4 enthält. Hier enthält die Datenbank 6 für den Kalendertag Montag beispielsweise zunächst um 8:00 Uhr eine geplante Reinigungstätigkeit für "Roboter 1", hier beispielsweise das als Saugroboter ausgebildete Bodenbearbeitungsgerät 4.

Zunächst führt das Bodenbearbeitungsgerät 4 wie in der Datenbank 6 gespeichert, die geplante Reinigung der Umgebung mittels der Bodenbearbeitungseinrichtung 2 durch. Dabei verfährt das Bodenbearbeitungsgerät 4 innerhalb der Umgebung bevorzugt nach einer geplanten Fortbewegungsroute, welche in einem lokalen Speicher des Bodenbearbeitungsgerätes 4 oder ebenfalls in der Datenbank 6 gespeichert sein kann. Während der Fortbewegung oder spätestens nach Beendigung der Reinigungstätigkeit detektiert eine Sensorik des Bodenbearbeitungsgerätes 4 die zu reinigende Fläche und vergleicht deren Beschaffenheit mit in einem lokalen Speicher des Bodenbearbeitungsgerätes 4 oder dem gemeinsamen Speicher 7 hinterlegten Referenzdaten von sauberen und schmutzigen Zuständen der Bodenfläche.

Sofern das Bodenbearbeitungsgerät 4 feststellt, dass trotz des Reinigungsvorgangs nach wie vor eine Verschmutzung, beispielsweise hier eine festgetrocknete Verschmutzung, verbleibt, leitet das Bodenbearbeitungsgerät 4 diese Information an den Speicher 7 weiter. Eine dem Speicher 7 zugeordnete zentrale Recheneinrichtung entnimmt dem Speicher 7 anhand der Information daraufhin eine Folgetätigkeit, die einem Ersatz der fehlgeschlagenen Reinigungstätigkeit des Bodenbearbeitungsgerätes 4, d.h. der Beseitigung der auf dem Boden festgetrockneten Verschmutzung, dient. Die Recheneinrichtung ermittelt, welche Bodenbearbeitungsgeräte 3, 4 innerhalb des Systems zur Verfügung stehen und über welche Bodenbearbeitungseinrichtungen 1, 2 diese verfügen. Hier stellt die Recheneinrichtung beispielsweise fest, dass aufgrund der festgetrockneten Verschmutzung eine Feuchtreinigung des Bodens erforderlich ist. Da das Bodenbearbeitungsgerät 3 eine für eine Feuchtreinigung geeignete Bodenbearbeitungseinrichtung 1, nämlich hier eine Wischwalze, aufweist, plant die Recheneinrichtung daraufhin eine ereignisabhängige Einsatztätigkeit des Bodenbearbeitungsgerätes 3, nämlich hier eine Feuchtreinigung nach dem Fehlschlagen der vorherigen trockenen Reinigungstätigkeit des Bodenbearbeitungsgerätes 4. Alternativ kann bereits auch im Voraus, d. h. vor der Einsatztätigkeit des ersten Bodenbearbeitungsgerätes 4, in der Datenbank 6 gespeichert sein, welche Aktion erfolgen soll, wenn die Einsatztätigkeit des Bodenbearbeitungsgerätes 4 fehlschlägt. Für diesen Fall kann ereignisabhängig, nämlich für den Fall des Fehlschlagens der Einsatztätigkeit des ersten Bodenbearbeitungsgerätes 4, bereits im Voraus geplant sein, welche Folgetätigkeit durch welches Bodenbearbeitungsgerät 3, 4 auszuführen ist, um die Reinigungsaufgabe erfolgreich abschließen zu können.

In beiden vorgenannten Fällen, d.h. entweder einer spontanen Planung der Folgetätigkeit im Falle der fehlgeschlagenen Reinigungstätigkeit des ersten Bodenbearbeitungsgerätes 4, oder einer im Voraus in der Datenbank 6 gespeicherten ereignisabhängigen Folgetätigkeit, wird eine Information über die erforderliche Folgetätigkeit an das zweite Bodenbearbeitungsgerät 3 übermittelt bzw. kann das Bodenbearbeitungsgerät 3 die Folgetätigkeit aus der Datenbank 6 entnehmen. Daraufhin steuert eine lokale Steuereinrichtung des Bodenbearbeitungsgerätes 3 das Bodenbearbeitungsgerät 3 und die zugehörige Bodenbearbeitungseinrichtung 1 derart, dass das Bodenbearbeitungsgerät 3 an den Ort der Verschmutzung fährt und dort eine Feuchtreinigung vornimmt. Gemäß einer besonderen Ausführung kann vorgesehen sein, dass die von der Recheneinrichtung geplante Folgetätigkeit zunächst einem Nutzer des Systems auf einem in Kommunikationsverbindung mit dem Speicher 7 stehenden mobilen Kommunikationsgerät 8, wie hier dem dargestellten Tablet-Computer, angezeigt wird. Daraufhin kann der Nutzer die vorgeschlagene Folgetätigkeit bestätigen, so dass ein entsprechender Steuerbefehl an das Bodenbearbeitungsgerät 3 übermittelt wird.

Des Weiteren ist es zusätzlich oder gemäß einer alternativen Ausführungsform möglich, dass ein Nutzer des Systems die in dem Speicher 7 gespeicherte Datenbank 6 manuell ändert oder ergänzt. Dabei greift der Nutzer vorteilhaft mittels eines externen Kommunikationsgerätes 8 auf den Speicher 7 bzw. die gemeinsame Datenbank 6 zu. Insbesondere kann der Nutzer auch zwei oder mehr Einsatztätigkeiten eines einzigen oder mehrerer Bodenbearbeitungsgeräte 3, 4 mit insgesamt mindestens zwei Bodenbearbeitungseinrichtungen 1, 2 abhängig voneinander festlegen, insbesondere Folgetätigkeiten für geplante Einsatztätigkeiten festlegen, welche im Falle eines Fehlschlagens einer ausgeführten Einsatztätigkeit ausgeführt werden sollen.

### Liste der Bezugszeichen

- 1: Bodenbearbeitungseinrichtung
- 2: Bodenbearbeitungseinrichtung
- 3: Bodenbearbeitungsgerät
- 4: Bodenbearbeitungsgerät
- 5: Hindernis
- 6: Datenbank
- 7: Speicher
- 8: Kommunikationsgerät
- 9: Detektionseinrichtung

## Patentansprüche

1. System mit mindestens zwei Bodenbearbeitungseinrichtungen (1, 2) mindestens eines sich selbsttätig fortbewegenden Bodenbearbeitungsgerätes (3, 4) zur automatisch gesteuerten Bearbeitung einer Fläche, wobei das System eine den Bodenbearbeitungseinrichtungen (1, 2) gemeinsam zugeordnete Datenbank (6) aufweist, welche in einem zu dem Bodenbearbeitungsgerät (3, 4) separat ausgebildeten externen Speicher (7) gespeichert ist und in welcher nach definierten Regeln Einsatztätigkeiten für die Bodenbearbeitungseinrichtungen (1, 2) zeitabhängig und ereignisabhängig geplant sind, wobei die Datenbank (6) eine Tabelle aufweist, in welcher Einsatztätigkeiten jeder Bodenbearbeitungseinrichtung (1, 2) nach Jahren, Monaten, Tagen und/ oder Uhrzeiten geplant sind, sowie eine der Datenbank (6) zugeordnete zentrale Recheneinrichtung, welche Einsatztätigkeiten nach definierten Regeln plant, wobei die Datenbank (6) wenn-dann-Verknüpfungen enthält, welche zwischen definierten Ereignissen und dadurch ausgelösten Einsatztätigkeiten der Bodenbearbeitungseinrichtungen (1, 2) definiert sind, wobei eine Einsatztätigkeit einer Bodenbearbeitungseinrichtung (1, 2) nur dann ausgelöst wird, wenn zu einem bestimmten Zeitpunkt ein definiertes Ereignis eintritt, und wobei in der Datenbank (6) mindestens zwei Einsatztätigkeiten eine Tätigkeitsfolge bilden, in welcher eine nachfolgende Einsatztätigkeit von einer zeitlich früheren Einsatztätigkeit abhängig ist, wobei eine zweite Einsatztätigkeit nur dann ausgeführt wird, wenn zuvor eine erste Einsatztätigkeit ausgeführt wurde, wobei die zweite Einsatztätigkeit entfällt, wenn die geplante erste Einsatztätigkeit nicht ausgeführt wird, und/oder wobei zu einer in der Datenbank (6) gespeicherten Einsatztätigkeit eine Folgetätigkeit gespeichert ist, welche abhängig von einem Fehlschlagen der ausgeführten Einsatztätigkeit definiert ist und ausgeführt wird.

2. System nach Anspruch 1, **dadurch gekennzeichnet, dass** die Bodenbearbeitungseinrichtungen (1, 2) an demselben Bodenbearbeitungsgerät (3, 4) oder an zwei verschiedenen Bodenbearbeitungsgeräten (3, 4) ausgebildet sind.

3. System nach einem der vorhergehenden Ansprüche, **dadurch gekennzeichnet, dass** zwei oder mehr Einsatztätigkeiten mindestens einer Bodenbearbeitungseinrichtung (1, 2) voneinander abhängig geplant sind.

4. System nach einem der vorhergehenden Ansprüche, **dadurch gekennzeichnet, dass** die Folgetätigkeit eine Wiederholung der Einsatztätigkeit und/ oder eine Einsatztätigkeit einer anderen Bodenbearbeitungseinrichtung (1, 2) ist und/oder eine Fehleranalyse und/oder eine Benachrichtigung eines Nutzers beinhaltet.

5. Verfahren zum Betrieb eines Systems mit mindestens zwei Bodenbearbeitungseinrichtungen (1, 2) mindestens eines sich selbsttätig fortbewegenden Bodenbearbeitungsgerätes (3, 4), wobei eine Fläche automatisch gesteuert mittels der Bodenbearbeitungseinrichtungen (1, 2) bearbeitet wird, wobei Einsatztätigkeiten für die Bodenbearbeitungseinrichtungen (1, 2) von einer zentralen Recheneinrichtung des Systems nach definierten Regeln zeitabhängig und ereignisabhängig geplant werden, wobei die geplanten Einsatztätigkeiten in einer den Bodenbearbeitungseinrichtungen (1, 2) gemeinsam zugeordneten und in einem zu dem Bodenbearbeitungsgerät (3, 4) separat ausgebildeten externen Speicher (7) gespeicherten Datenbank (6) gespeichert werden, wobei die Datenbank (6) eine Tabelle aufweist, in welcher Einsatztätigkeiten jeder Bodenbearbeitungseinrichtung (1, 2) nach Jahren, Monaten, Tagen und/oder Uhrzeiten geplant werden, wobei die Datenbank (6) wenn-dann-Verknüpfungen enthält, welche zwischen definierten Ereignissen und dadurch ausgelösten Einsatztätigkeiten der Bodenbearbeitungseinrichtungen (1, 2) definiert sind, wobei eine Einsatztätigkeit einer Bodenbearbeitungseinrichtung (1, 2) nur dann ausgelöst wird, wenn zu einem bestimmten Zeitpunkt ein definiertes Ereignis eintritt, und wobei in der Datenbank (6) mindestens zwei Einsatztätigkeiten eine Tätigkeitsfolge bilden, in welcher eine nachfolgende Einsatztätigkeit von einer zeitlich früheren Einsatztätigkeit abhängig ist, wobei eine zweite Einsatztätigkeit nur dann ausgeführt wird, wenn zuvor eine erste Einsatztätigkeit ausgeführt wurde, wobei die zweite Einsatztätigkeit entfällt, wenn die geplante erste Einsatztätigkeit nicht ausgeführt wird, und/oder wobei in Abhängigkeit von einem bestimmten Ereignis, nämlich einem Fehlschlagen einer ausgeführten Einsatztätigkeit, eine definierte Folgetätigkeit ausgeführt wird.

6. Verfahren nach Anspruch 5, **dadurch gekennzeichnet, dass** zwei oder mehr Einsatztätigkeiten mindestens einer Bodenbearbeitungseinrichtung (1, 2) voneinander abhängig geplant werden.

7. Verfahren nach Anspruch 5 oder 6, **dadurch gekennzeichnet, dass** die definierte Folgetätigkeit ein Wiederholen der Einsatztätigkeit und/ oder eine Einsatztätigkeit einer anderen Bodenbearbeitungseinrichtung (1, 2) und/ oder eine Fehleranalyse und/oder ein Benachrichtigen eines Nutzers ist.

## Claims

1. System comprising at least two floor processing means (1, 2) of at least one automatically moving floor processing device (3, 4) for the automatically controlled processing of a surface, wherein the system has a database (6) which is jointly assigned to the floor processing means (1, 2) and which is stored in a external memory (7) formed separately from the floor processing device (3, 4) and in which operational activities for the floor processing means (1, 2) are planned in a time-dependent and event-dependent manner according to defined rules, wherein the database (6) comprises a table in which operational activities of each floor processing means (1, 2) are planned according to years, months, days and/or times, and comprising a central computing device which is assigned to the database (6) and plans operational activities according to defined rules, wherein the database (6) contains if-then links which are defined between defined events and operational activities of the floor processing means (1, 2) triggered thereby, wherein an operational activity of a floor processing means (1, 2) is triggered only if a defined event occurs at a specific point in time, and wherein at least two operational activities form a sequence of activities in the database (6), in which sequence a subsequent operational activity depends on an earlier operational activity, wherein a second operational activity is executed only if a first operational activity was previously executed, wherein the second operational activity is not executed if the planned first operational activity is not executed, and/or wherein a follow-up activity is stored for an operational activity stored in the database (6), which follow-up activity is defined and executed depending on a failure of the executed operational activity.

2. System according to claim 1, **characterised in that** the floor processing means (1, 2) are formed on the same floor processing device (3, 4) or on two different floor processing devices (3, 4).

3. System according to either of the preceding claims, **characterised in that** two or more operational activities of at least one floor processing means (1, 2) are planned interdependently.

4. System according to any of the preceding claims, **characterised in that** the follow-up activity is a repetition of the operational activity and/or an operational activity of another floor processing means (1, 2) and/or contains an error analysis and/or a user notification.

5. Method for operating a system comprising at least two floor processing means (1, 2) of at least one automatically moving floor processing device (3, 4), wherein a surface is processed in an automatically controlled manner by means of the floor processing means (1, 2), wherein operational activities for the floor processing means (1, 2) are planned by a central computing device of the system in a time-dependent and event-dependent manner according to defined rules, wherein the planned operational activities are stored in a database (6) which is jointly assigned to the floor processing means (1, 2) and which is stored in an external memory (7) formed separately from the floor processing device (3, 4), wherein the database (6) comprises a table in which operational activities of each floor processing means (1, 2) are planned according to years, months, days and/or times, wherein the database (6) contains if-then links which are defined between defined events and operational activities of the floor processing means (1, 2) triggered thereby, wherein an operational activity of a floor processing means (1, 2) is triggered only if a defined event occurs at a specific point in time, and wherein at least two operational activities form a sequence of activities in the database (6), in which sequence a subsequent operational activity depends on an earlier operational activity, wherein a second operational activity is executed only if a first operational activity was previously executed, wherein the second operational activity is not executed if the planned first operational activity is not executed, and/or wherein a defined follow-up activity is executed depending on a specific event, namely a failure of an executed operational activity.

6. Method according to claim 5, **characterised in that** two or more operational activities of at least one floor processing means (1, 2) are planned interdependently.

7. Method according to either claim 5 or claim 6, **characterised in that** the defined follow-up activity is a repetition of the operational activity and/or an operational activity of another floor processing means (1, 2) and/or an error analysis and/or a user notification.

## Revendications

1. Système avec au moins deux dispositifs de traitement du sol (1, 2) d'au moins un appareil de traitement du sol (3, 4) se déplaçant automatiquement pour le traitement commandé automatiquement d'une surface, le système présentant une banque de données (6) associée en commun aux dispositifs de traitement du sol (1, 2), qui est mémorisée dans une mémoire externe (7) formée séparément de l'appareil de traitement du sol (3, 4) et dans laquelle des opérations d'intervention pour les dispositifs de traitement du sol (1, 2) sont planifiées selon des règles définies en fonction du temps et d'événements, dans lequel la banque de données (6) présente un tableau dans lequel des opérations d'intervention de chaque dispositif de traitement du sol (1, 2) sont planifiées en fonction des années, des mois, des jours et/ou des heures, ainsi qu'un dispositif de calcul central associé à la banque de données (6), qui planifie des opérations d'intervention selon des règles définies, la banque de données (6) contenant des combinaisons si-alors qui sont définies entre des événements définis et des opérations d'intervention des dispositifs de traitement du sol (1, 2) déclenchées par ceux-ci, dans lequel une opération d'intervention d'un dispositif de traitement du sol (1, 2) n'est déclenchée que lorsqu'un événement défini se produit à un moment déterminé, et dans lequel au moins deux opérations d'intervention forment dans la base de données (6) une suite d'opérations dans laquelle une opération d'intervention suivante dépend d'une opération d'intervention antérieure dans le temps, dans lequel une deuxième opération d'intervention n'est exécutée que si une première opération d'intervention a été exécutée auparavant, dans lequel la deuxième opération d'intervention est supprimée si la première opération d'intervention planifiée n'est pas exécutée, et/ou dans lequel une opération consécutive est mémorisée pour une opération d'intervention enregistrée dans la base de données (6), laquelle est définie et exécutée en fonction d'un échec de l'opération d'intervention exécutée.

2. Système selon la revendication 1, **caractérisé en ce que** les dispositifs de traitement du sol (1, 2) sont formés au niveau d'un même appareil de traitement du sol (3, 4) ou au niveau de deux appareils de traitement du sol (3, 4) différents.

3. Système selon l'une des revendications précédentes, **caractérisé en ce que** deux ou plusieurs opérations d'intervention d'au moins un dispositif de traitement du sol (1, 2) sont planifiées de manière interdépendante.

4. Système selon l'une des revendications précédentes, **caractérisé en ce que** l'opération consécutive est une répétition de l'opération d'intervention et/ou une opération d'intervention d'un autre dispositif de traitement du sol (1, 2) et/ou comprend une analyse d'erreur et/ou une notification d'un utilisateur.

5. Procédé de fonctionnement d'un système avec au moins deux dispositifs de traitement du sol (1, 2) d'au moins un appareil de traitement du sol (3, 4) se déplaçant automatiquement, dans lequel une surface est traitée sous commande automatique au moyen des dispositifs de traitement du sol (1, 2), dans lequel des opérations d'intervention pour les dispositifs de traitement du sol (1, 2) sont planifiées par un dispositif de calcul central du système selon des règles définies en fonction du temps et en fonction d'évènements, dans lequel les opérations d'intervention planifiées sont mémorisées dans une base de données (6) associée en commun aux dispositifs de traitement du sol (1, 2) et mémorisée dans une mémoire externe (7) formée séparément de l'appareil de traitement du sol (3, 4), dans lequel la base de données (6) présente un tableau dans lequel les activités d'intervention de chaque dispositif de traitement du sol (1, 2) sont planifiées par année, mois, jour et/ou heure, dans lequel la base de données (6) contient des combinaisons si-alors qui sont définies entre des événements définis et des opérations d'intervention des dispositifs de traitement du sol (1, 2) déclenchées par ceux-ci, dans lequel une opération d'intervention d'un dispositif de traitement du sol (1, 2) n'est déclenchée que lorsqu'un événement défini se produit à un moment déterminé, et dans lequel au moins deux opérations d'intervention forment dans la base de données (6) une suite d'opérations dans laquelle une opération d'intervention suivante dépend d'une opération d'intervention antérieure dans le temps, dans lequel une deuxième opération d'intervention n'est exécutée que si une première activité d'intervention a été exécutée auparavant, dans lequel la deuxième opération d'intervention est supprimée si la première opération d'intervention planifiée n'est pas exécutée, et/ou dans lequel une opération consécutive définie est exécutée en fonction d'un événement déterminé, à savoir un échec d'une opération d'intervention exécutée.

6. Procédé selon la revendication 5, **caractérisé en ce que** deux ou plusieurs opérations d'intervention d'au moins un dispositif de traitement du sol (1, 2) sont planifiées de manière interdépendante.

7. Procédé selon la revendication 5 ou 6, **caractérisé en ce que** l'opération consécutive définie est une répétition de l'opération d'intervention et/ou une opération d'un autre dispositif de traitement du sol (1, 2) et/ou une analyse d'erreur et/ou une notification d'un utilisateur.
